# EUROPÄISCHE PATENTSCHRIFT

(11) **EP 0 716 132 B1**
(45) Veröffentlichungstag und Bekanntmachung des Hinweises auf die Patenterteilung: **18.01.2006**
(21) Anmeldenummer: 95118499.3
(22) Anmeldetag: 24.11.1995
(51) Int. Cl.: C09D 5/03, C09D 5/36

(54) **Effektpulverlacke**
Effect powder paint
Peinture en poudre à effet

(30) Priorität: 05.12.1994 DE 4443048
(43) Veröffentlichungstag der Anmeldung: 12.06.1996
(73) Patentinhaber: Merck Patent GmbH, 64293 Darmstadt (DE)
(72) Erfinder: Kieser, Manfred, Dr., D-64291 Darmstadt (DE); Hennemann, Alfred, D-64319 Pfungstadt (DE); Stahlecker, Otto, D-64291 Darmstadt (DE)

(56) Entgegenhaltungen:
- DE-A- 2 262 217
- DE-A- 2 457 893
- FR-A- 2 169 081
- FR-A- 2 237 927
- US-A- 5 187 220

## Beschreibung

Die vorliegende Erfindung betrifft Effektpulverlacke, die 0,1 bis 10 Gew.% an leitfähigen Pigmenten enthalten, sowie deren Herstellungsverfahren und Verwendung.

Beschichtungen werden im allgemeinen durch Applikation vollständiger Beschichtungsmassen erzeugt, d.h., von Beschichtungssystemen, die bei der Applikation alle notwendigen Bestandteile, wie z.B. Bindemittel, Pigmente, Füllstoffe, Additive, Lösemittel etc. einer Beschichtung enthalten.

Für gewisse Anwendungen sind andere Verfahren bekannt, bei denen Binder und Effektstoff getrennt angewendet werden, wie z.B. Beflocken, Bestreuen, Faserspritzen usw.

Pulverlacke, also lösemittelfreie und umweltfreundliche Lacksysteme werden üblicherweise auch als komplette stofflich einheitliche Systeme angewendet. Das führt in manchen Fällen zu großen anwendungstechnischen Problemen.

Bei der Verwendung von Pulverlacken treten bei der Applikation auf ein Substrat in der Regel Entmischungserscheinungen auf. Es kann sich hierbei z.B. um eine Abreicherung der feinen Teilchen im wiedergewonnenen Pulverlack handeln. Diese Entmischung führt zu Veränderungen der Verarbeitungseigenschaften und der optischen Eigenschaften der Beschichtung.

Das Problem der Entmischung zeigt sich verstärkt bei pigmentierten Pulverlacken. Eine Abtönung bzw. Mischung von farblich unterschiedlichen Pulverlacken ist nicht möglich, da solche Mischungen nicht entmischungsstabil sind. Auch eine nachträgliche Veränderung des einmal hergestellten Farbtons durch Mischen mit einem nur hinsichtlich der Pigmentierung unterschiedlichen Pulverlacks ist nicht möglich.

In der Praxis wird zum Teil durch relativ aufwendige Maßnahmen versucht, das Problem der Entmischung zu vermeiden. So wird über automatische Dosierungseinrichtungen zum Overspray immer ein möglichst konstanter Anteil an Frischpulver zugegeben.

Bei der nachträglichen Zugabe (dry blend) von Metalleffekt- oder Perlglanzpigmenten ist - abhängig vom Pulverlack und Glanzpigment - eine An- oder Abreicherung von Pigmenten auf der Oberfläche des zu lackierenden Objektes zu beobachten. Ursache hierfür ist das unterschiedliche Aufladeverhalten der Pulverlack- und Glanzpigmentteilchen. Die optischen Eigenschaften, wie z.B. Glanz, Farbe, Deckvermögen von den lackierten Objekten, unterscheiden sich deutlich von denen, die mit eingesetztem Overspray-Material lackiert wurden. Die Wiederverwendung von Overspray wird auch in Verbindung mit viel Originalmaterial problematisch.

In der DE 24 34 855 wird ein Verfahren zur Herstellung Metalleffektpigmentierter Pulverlacke beschrieben, bei dem durch einen Bürstenprozeß die Pigmentplättchen auf der Oberfläche der Pulverlackteilchen fixiert werden. Durch Einbringen von mechanischer und optionell thermischer Energie wird die Verbindung von Pulverlack und Effektpigment erreicht.

Die hierzu erforderliche Anlage ist sehr aufwendig, was sich in den hohen Herstellungskosten für die glanzpigmentierten Pulverlacke niederschlägt. Daneben weisen die so erhaltenen Pulverlacke häufig einen unzureichenden Glanz auf. Von Nachteil ist weiterhin, daß eine nachträgliche Veränderung des Farbtons nur bedingt möglich ist.

DE-A-24 57 893 beschreibt eine pulverförmige Metalleffekt-Überzugsmasse enthaltend eine Mischung von Metallteilchen, die aus eingekapselten Aluminiumschuppen und Nickelpulver besteht.

Aus DE-A-22 62 217 ist eine pulverförmige Überzugsmasse bekannt, die zwei verschieden gefärbte Teilchen und 0,1 bis 5 Gew.% an reflektierenden Plättchen, wie Aluminiumplättchen und mit Titandioxid beschichtete Glimmerplättchen, enthält.

Ein weiterer Nachteil ist, daß in Pulverlacken aufgrund des Herstellprozesses Glanzpigmente nicht in der üblichen Art und Weise eingesetzt werden können. Bei der Herstellung von Pulverlacken werden alle Bestandteile in Extrudern in der Schmelze gemischt und der extrudierende stückige Pulverlack wird als festes Material einer Mühle zugeführt. Dort wird der Pulverlack auf die für die Anwendung notwendige Teilchengröße gemahlen. Bei diesem Mahlprozeß wird jedoch ein großer Teil der Glanzpigmentplättchen zerstört, was zu einer Minderung des Glanzeffektes führt.

Es bestand daher die Aufgabe, Pulverlacke zu finden, die sich durch ihren hohen Glanz und/oder Sprenkeleffekte auszeichnen und keine der oben genannten Nachteile aufweisen.

Überraschenderweise wurde nun gefunden, daß bei Effektpulverlacken die Entmischung der Pulverlackteilchen bei der Applikation auf einen Gegenstand unterbleibt, wenn der Pulverlack leitfähige Pigmente enthält, wobei der pigmentierte Pulverlack selbst aber nicht leitfähig ist. Der Zusatz von leitfähigen Pigmenten bewirkt, daß glanzpigmenthaltige Pulverlacke entmischungsstabil sind. Eine Änderung der Korngrößenverteilung tritt nach Zusatz der leitfähigen Pigmente nicht mehr auf.

Gegenstand der Erfindung sind daher Effektpulverlacke, die 0,1 bis 10 Gew.% an leitfähigen Pigmenten enthalten.

Gegenstand der Erfindung ist weiterhin ein Verfahren zur Herstellung der erfindungsgemäßen Effektpulverlacke, das sich dadurch auszeichnet, daß man ein oder mehrere leitfähige Pigmente und gegebenenfalls ein oder mehrere Glanzpigmente und den Pulverlack intensiv miteinander mischt.

Wesentlicher Bestandteil der erfindungsgemäßen Effektpulverlacke sind die leitfähigen Pigmente. Geeignete leitfähige Pigmente sind Pigmente mit einem Pulverwiderstand von ≤ 10⁶ bis 10⁷ Ω (Meßzelle nach Kleber) und sind dotierte Metalloxide und pulverförmige Trägermaterialien, die mit einer leitfähigen Schicht überzogen sind, wie z.B. in der EP 0 373 575 beschrieben. Dem Pulverlack kann auch ein Gemisch aus verschiedenen leitfähigen Pigmenten zugesetzt werden. Enthält der erfindungsgemäße Pulverlack ein oder mehrere Glanzpigmente, die selbst eine ausreichende Leitfähigkeit besitzen, so ist die Zugabe eines weiteren leitfähigen Pigments erforderlich. Zu den Glanzpigmenten zählen insbesondere Metalleffektpigmente und Perlglanzpigmente.

Die Entmischung Glanzpigment-Pulverlack oder im Pulverlack selbst kann in der Regel bereits durch einen Zusatz von 0,1 bis 10 Gew.%, vorzugsweise 0,3-7 Gew.%, insbesondere 0,5-5 Gew.% unterbunden werden. Die erforderliche Konzentration hängt aber im wesentlichen von der Pulverleitfähigkeit und der Geometrie (Größe und Form) des eingesetzten Pigments ab.

Als Glanzpigment werden vorzugsweise handelsübliche pulverförmige Metalleffektpigmente, wie Aluminiumplättchen, z.B. Standart® von der Fa. Eckart, Glanzpigmente, wie z.B. Paliochrom® von der BASF, plättchenförmiges Eisenoxid sowie Perlglanzpigmente - mit Metalloxiden beschichtete Glimmerschuppenpigmente - erhäftlich z.B. von der Fa. Merck, unter dem Handelsnamen Iriodin® - eingesetzt. Letztere sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 356, 31 51 355, 32 11 602, 32 35 017, 33 34 598 und 35 28 256 bekannt. Glanzpigmente, die von sich aus eine ausreichende Leitfähigkeit besitzen, werden in der DE-OS 41 21 352 beschrieben. Diese mit Erdalkalionen dotierten Glanzpigmente zeigen in Gegenwart von Luftfeuchtigkeit eine ausreichende Leitfähigkeit um die Entmischung Glanzpigment-Pulverlack zu unterbinden. Oberflächenmodifizierte Glanzpigmente, z.B. zur Verbesserung der Witterungsbeständigkeit können ebenfalls zur Anwendung kommen.

Der Anteil der Glanzpigmentkomponente bei dem erfindungsgemäßen Pulverlack kann 0,1 bis 40 Gew.%, vorzugsweise 0,5 bis 20 Gew.% und insbesondere 1 bis 10 Gew.% bezogen auf die Gesamtmischung betragen.

Alle handelsüblichen Pulverlacke können für den modifizierten Pulverlack verwendet werden, welche üblicherweise auf reaktiven Epoxiden, Polyestern, Polyacrylaten oder Polyurethanen, daneben auch auf anderen Polymeren basieren, die sowohl reaktiv als auch thermoplastisch sein können. Besonders bevorzugt sind Polyester-Pulverlacke, Epoxid-Pulverlacke sowie Polyester-Epoxid-Pulverlacke, Acrylat-Pulverlacke sowie Gemische verschiedener Pulverlacke.

Mischungen unterschiedlicher Pulverlacke z.B. chemisch und/oder farblich unterschiedliche handelsübliche Pulverlacke sind nach Zusatz leitfähiger Pigmente bei der Applikation entmischungsstabil. Bei farblichen Veränderungen (Abtönen) ist es allerdings von Vorteil, wenn mindestens eine Komponente des resultierenden pigmentierten Pulverlackgemisches eine Korngröße kleiner 10-20 µm aufweist, da sonst die unterschiedlichen Pulverlackteilchen einzeln erkennbar bleiben können. Durch die gezielte Verwendung groberer Pulverlackteilchen, vorzugsweise > 30 µm, können Pulverlackmischungen mit besonderen Effekten erzielt werden, wie z.B. Sprenkeleffekte oder ein heterogener Lackaufbau.

Der erfindungsgemäße Effektpulverlack kann neben der Pigmentkomponente noch weitere Komponenten, wie z.B. Rieselhilfen und Verlaufsmittel enthalten.

Die Herstellung der erfindungsgemäßen Effektpulverlacke ist einfach und leicht zu handhaben. Die Pigmentkomponente - leitfähiges Pigment oder das Gemisch aus nichtleitfähigem Glanzpigment und leitfähigem Pigment - werden mit dem Pulverlack intensiv gemischt, z.B. mit einem Schaufel- oder Taumelmischer. Die Einzelkomponenten können dabei gleichzeitig oder nacheinander dem Pulverlack zugemischt werden. Wird dem Pulverlack mehr als eine Komponente zugesetzt, so empfiehlt es sich aufgrund der leichteren Handhabung das fertige Pigmentgemisch, z.B. bestehend aus leitfähigem Pigment und Glanzpigment, dem Pulverlack zuzumischen. Der erhaltene Effektpulverlack ist lagerstabil, d.h. es findet keine Entmischung statt. Wird der erfindungsgemäße Effektpulverlack auf das zu beschichtende Substratmaterial z.B. elektrostatisch appliziert, so geschieht das in der Weise, daß die Substratoberfläche vollständig mit einer homogenen Pulverlackschicht bedeckt ist.

Der erfindungsgemäße Pulverlack kann, wie der Basispulverlack auch, auf beliebige Substratmaterialien, beispielsweise Metalle wie Eisen, Stahl, Aluminium, Kupfer, Bronze, Messing sowie Metallfolien aber auch leitfähige modifizierte Oberflächen von Glas, Keramik und Beton u.ä., als auch auf nichtleitende Oberflächen wie Holz, z.B. Möbel, Glas, Keramik, Kunststoffen, anorganische Baustoffe oder andere Materialien zu dekorativen und/oder schützenden Zwecken aufgebracht werden.

Zur Verbesserung der Oberflächenqualität können auf die Effektpulverlackschicht auch noch ein oder mehrere Klarlackschichten aufgebracht werden, wodurch in der Regel noch eine Verbesserung sowohl des Aussehens als auch der Haltbarkeit der Gesamtlackierung erzielt wird. Der transparente Schlußlack ist jedoch nicht unbedingt erforderlich.

Die folgenden Beispiele sollen die Erfindung näher erläutern, ohne sie zu begrenzen:

### Beispiel 1

5 g Iriodin® 103 (TiO₂-Glimmerpigment der Teilchengröße 10-50 µm der Fa. Merck, Darmstadt, BRD) sowie 2 g Minatec® 30 CM (leitfähiges Pigment der Fa. Merck, Darmstadt, BRD) werden mit 93 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Gesamtpigmentgehalt (Perlglanzpigment und leitfähiges Pigment) beträgt 6,9 % (Glührückstand). Eine Entmischung fand nicht statt. Der Widerstand des leitfähigen Pigmentes in der Meßzelle nach Kleber beträgt 330 Ω. Der Widerstand des Pulverlacks lag oberhalb 10¹²Ω.

### Vergleich

5 g Iriodin®103 werden mit 95 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Pigmentgehalt (Perlglanzpigment) beträgt 2,9 %. Die Mischung war nicht entmischungsstabil.

### Beispiel 2

5 g Standart Spezial PC 20 (Aluminiumpigment der Fa. Eckart, Fürth/Bayern, BRD) sowie 2 g Minatec® 30 CM (leitfähiges Pigment der Fa. Merck, Darmstadt, BRD) werden mit 93 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Gesamtpigmentgehalt berechnet als Aluminiumpigment PC 20 und leitfähiges Pigment beträgt 7,1 %. Eine Entmischung fand nicht statt. Der Widerstand des leitfähigen Pigmentes in der Meßzelle nach Kleber beträgt 330 Ω. Der Widerstand des Pulverlacks lag oberhalb von 10¹² Ω.

### Vergleich

5 g Standart Spezial PC 20 (Aluminiumpigment der Fa. Eckart, Fürth/Bayern, BRD) werden mit 95 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Pigmentgehalt berechnet als Aluminiumpigment PC 20 beträgt 3,3 %. Die Mischung war nicht entmischungsstabil.

### Beispiel 3

5 g Iriodin® 103 sowie 2 g Sacon P 401 (leitfähiges Pigment der Fa. Sachtleben, BRD) werden mit 93 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Gesamtpigmentgehalt (Perlglanzpigment und leitfähiges Pigment) beträgt 7,0 %. Eine Entmischung fand nicht statt. Der Widerstand des leitfähigen Pigmentes in der Meßzelle nach Kleber beträgt 480 Ω. Der Widerstand des Pulverlacks lag oberhalb von 10¹² Ω.

### Vergleich 1

5 g Iriodin® 103 werden mit 95 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Pigmentgehalt (Perlglanzpigment) beträgt 2,9 %. Die Mischung war nicht entmischungsstabil.

### Vergleich 2

5 g Iriodin® 119 (mit Ca²⁺-dotiertes TiO₂-Glimmerpigment der Teilchengröße 5-25 µm der Fa. Merck, Darmstadt, BRD) werden mit 95 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Pigmentgehalt (Perlglanzpigment) beträgt 5,0 %. Eine Entmischung fand nicht statt. Der Widerstand des leitfähigen Pigmentes in der Meßzelle nach Kleber beträgt 1 MΩ (60 % rel. Feuchte). Der Widerstand des Pulverlacks lag oberhalb von 10¹² Ω.

### Vergleich 3

5 g Iriodin® 120 (TiO₂-Glimmerpigment der Teilchengröße 5-25 µm der Fa. Merck, Darmstadt, BRD) werden mit 95 g Teodur 00013 (Polyester-TGIC-Pulverlack der Fa. Teodur NV, Breda, Holland) intensiv gemischt. Die Mischung wird elektrostatisch auf ein Aluminiumblech aufgebracht. Die uneingebrannte Lackschicht wird abgelöst und der Pigmentgehalt bestimmt. Der Pigmentgehalt (Perlglanzpigment) beträgt 6,7 %. Die Mischung war nicht entmischungsstabil. Der Widerstand des Iriodin 120 lag bei 10⁸ Ω (60 % rel. Feuchte).

### Vergleich 4

Die im Vergleich 2 angeführte Mischung wird getrocknet (2 h, 20 °C, 50 mbar) und anschließend analog verarbeitet. Der auf dem Blech gefundene Pigmentgehalt beträgt 6,0 %. Der Widerstand des "leitfähigen" Pigmentes in der Meßzelle nach Kleber beträgt 25 MΩ (getrocknet bei 120 °C). Die Mischung war nicht mehr entmischungsstabil.

### Bespiel 4

48 g Teodur 00013 (Polyester-TGIC-Pulverlack der Fa. Teodur NV, Breda, Holland) werden mit 2 g Minatec® 30 CM (leitfähiges Pigment der Fa. Merck, Darmstadt, BRD) intensiv gemischt und anschließend elektrostatisch auf ein Aluminiumblech aufgebracht. Die uneingebrannte Lackschicht wird abgelöst. Die Korngrößenverteilung des Ausgangsmaterials sowie des Materials auf dem Blech wird untersucht. Die Korngrößenverteilung hat sich nicht verändert.

### Vergleich

50 g Teodur 00013 (Polyester-TGIC-Pulverlack der Fa. Teodur NV, Breda, Holland) werden elektrostatisch auf ein Aluminiumblech aufgebracht. Die uneingebrannte Lackschicht wird abgelöst. Die Korngrößenverteilung des Ausgangsmaterials sowie des Materials auf dem Blech wird untersucht. Die Korngrößenverteilung hat sich deutlich verändert, die feinen Teilchen (< 10 µm) und die groben Teilchen (> 40 µm) haben sich angereichert. Der Pulverlack war nicht entmischungsstabil.

### Beispiel 5

Je 49 g Interpon 600 schwarz und Interpon 600 reinweiß (Polyesterpulverlack der Fa. International Powdercoating, Bensheim, BRD) wurde mit einer Luftstrahlmühle auf eine Korngröße kleiner 10 µm gemahlen. Die beiden Pulverlacke wurden vereinigt und mit 2 g Minatec® 30 CM (leitfähiges Pigment der Fa. Merck, Darmstadt, BRD) intensiv gemischt und anschließend elektrostatisch auf ein Aluminiumblech aufgebracht und eingebrannt. Das Overspray wurde aufgefangen, elektrostatisch ebenfalls auf ein Blech aufgebracht und eingebrannt. Beide Bleche zeigen eine einheitliche Lackschicht. Verlaufsstörungen, Schlieren oder Schatten konnten nicht beobachtet werden. Die optischen Eigenschaften (Farbe, Glanz, Deckvermögen) sind bei beiden Blechen identisch.

### Vergleich:

Je 50 g Interpon 600 schwarz und Interpon 600 reinweiß (Polyesterpulverlack der Fa. International Powdercoating, Bensheim, BRD) wurden mit einer Luftstrahlmühle auf eine Korngröße kleiner 10 µm gemahlen. Die beiden Pulverlacke wurden vereinigt, intensiv gemischt und anschließend elektrostatisch auf ein Aluminiumblech aufgebracht und eingebrannt. Das Overspray wurde aufgefangen, elektrostatisch auf ein Aluminiumblech aufgebracht und eingebrannt. Das erste Blech zeigte eine deutlich hellere Lackschicht als die Bleche mit leitfähigem Pigment. Das Blech aus dem Overspray hat eine deutlich dunklere Lackschicht sowohl im Vergleich zum Blech aus dem Originalmaterial als auch gegenüber den Blechen mit leitfähigem Pigment.

### Beispiel 6

29 g Interpon 600 schwarz (Polyesterpulverlack der Fa. International Powdercoating, Bensheim, BRD), 69 g Teodur 00013 (TGIC-Pulverlack der Fa. Teodur NV, Breda, Holland) und 2 g Minatec® 30 CM (leitfähiges. Pigment der Fa. Merck, Darmstadt, BRD) wurden intensiv gemischt und anschließend elektrostatisch auf ein Aluminiumblech aufgebracht und eingebrannt. Das Overspray wurde aufgefangen und ebenfalls elektrostatisch auf ein Aluminiumblech aufgebracht und eingebrannt. Beide Bleche zeigen eine klare Beschichtung mit schwarzen Punkten. Der Farbeindruck auf beiden Blechen ist identisch.

### Vergleich

30 g Interpon 600 schwarz (Polyesterpulverlack der Fa. International Powdercoating, Bensheim, BRD) und 70 g Teodur 00013 (Polyester-TGIC-Pulverlack der Fa. Teodur NV, Breda, Holland) werden intensiv gemischt und anschließend elektrostatisch auf ein Aluminiumblech aufgebracht und eingebrannt. Das Overspray wurde aufgefangen, elektrostatisch auf ein Aluminiumblech aufgebracht und eingebrannt. Das erste Blech zeigt eine klare Lackschicht mit sehr wenigen dunklen Stippen. Das Blech aus dem Overspray zeigte eine deutlich dunklere Lackschicht mit Schlieren.

Diese Bleche sind deutlich unterschiedlich. Sie unterscheiden sich auch stark von denen aus Beispiel 8 (mit Zusatz von leitfähigem Pigment).

### Beispiel 7

Ein Pigmentgemisch bestehend aus 5 g Iriodin® 103 und 2 g Minatec® 30 CM wird mit 93 g Teodur 00 013 (Polyester-TGIC-Pulverlack der Fa. Teodur NV, Breda, Holland) intensiv gemischt. Die Mischung wird elektrostatisch auf ein Aluminiumblech appliziert. Eine Entmischung fand nicht statt. Es wurden die gleichen Ergebnisse wie in Beispiel 1 erhalten.

## Patentansprüche

1. Effektpulverlack, enthaltend eine Pulverlackkomponente und eine Pigmentkomponente, **dadurch gekennzeichnet, dass** er 0.1 bis 10 Gew.% an leitfähigen Pigmenten enthält, wobei die leitfähigen Pigmente pulverförmige Trägermaterialien sind, die mit einer leitfähigen Schicht belegt sind oder dotierte Metalloxide sind oder Gemische hieraus sind.

2. Effektpulverlack nach Anspruch 1, **dadurch gekennzeichnet, dass** er zusätzlich ein oder mehrere Glanzpigmente enthält.

3. Effektpulverlack nach Anspruch 2, **dadurch gekennzeichnet, dass** das Glanzpigment ein Perlglanzpigment oder ein Metalleffektpigment enthält.

4. Effektpulverlack nach Anspruch 2 oder 3, **dadurch gekennzeichnet, dass** der Anteil an Glanzpigment 0.1 - 40 Gew.%, bezogen auf die Gesamtmischung, beträgt.

5. Effektpulverlack nach einem der Ansprüche 1 bis 4, **dadurch gekennzeichnet, dass** der Pulverlack ein Polyester, Polyacrylat oder Polyurethan, Epoxid oder Polyester-Epoxid ist.

6. Effektpulverlack nach Anspruch 1, **dadurch gekennzeichnet, dass** der Pulverlack ein Gemisch von zwei oder mehreren chemisch und/oder farblich unterschiedlichen Pulverlacken ist.

7. Effektpulverlack nach Anspruch 6, **dadurch gekennzeichnet, dass** mindestens eine Komponente des Effektpulverlackgemisches eine Korngröße kleiner 10-20 µm aufweist.

8. Effektpulverlack nach Anspruch 6, **dadurch gekennzeichnet, dass** die Pulverlackteilchen eine Korngröße > 30 µm aufweisen.

9. Verfahren zur Herstellung des Effektpulverlacks nach Anspruch 1, **dadurch gekennzeichnet, dass** man ein oder mehrere leitfähige Pigmente und gegebenenfalls ein oder mehrere Glanzpigmente gleichzeitig, getrennt oder als Pigmentgemisch dem Pulverlack zusetzt und intensiv miteinander mischt.

10. Verwendung des Effektpulverlacks nach Anspruch 1 zur Beschichtung von Metallen, Holz, Glas, Keramik, Kunststoffen und anorganischen Baustoffen.

## Claims

1. Effect powder coating comprising a powder coating component and a pigment component, **characterised in that** it comprises 0.1 to 10% by weight of conductive pigments, where the conductive pigments are pulverulent support materials coated with a conductive layer or are doped metal oxides or are mixtures thereof.

2. Effect powder coating according to Claim 1, **characterised in that** it additionally comprises one or more lustre pigments.

3. Effect powder coating according to Claim 2, **characterised in that** the lustre pigment comprises a pearlescent pigment or a metal-effect pigment.

4. Effect powder coating according to Claim 2 or 3, **characterised in that** the proportion of lustre pigment is 0.1 - 40% by weight, based on the mixture as a whole.

5. Effect powder coating according to one of Claims 1 to 4, **characterised in that** the powder coating is a polyester, polyacrylate or polyurethane, epoxide or polyester-epoxide.

6. Effect powder coating according to Claim 1, **characterised in that** the powder coating is a mixture of two or more powder coatings which differ chemically and/or in colour.

7. Effect powder coating according to Claim 6, **characterised in that** at least one component of the effect powder coating mixture has a particle size smaller than 10-20 µm.

8. Effect powder coating according to Claim 6, **characterised in that** the powder coating particles have a particle size > 30 µm.

9. Process for the preparation of the effect powder coating according to Claim 1, **characterised in that** one or more conductive pigments and optionally one or more lustre pigments are added simultaneously, separately or as a pigment mixture to the powder coating and mixed vigorously with one another.

10. Use of the effect powder coating according to Claim 1 for coating metals, wood, glass, ceramic, plastics and inorganic building materials.

## Revendications

1. Revêtement de poudre d'effet comprenant un composant de revêtement de poudre et un composant de pigment, **caractérisé en ce qu'**il comprend de 0,1% à 10% en poids de pigments conducteurs où les pigments conducteurs sont des matériaux de support pulvérulents qui sont revêtus d'une couche conductrice ou sont des oxydes métalliques dopés ou sont des mélanges afférents.

2. Revêtement de poudre d'effet selon la revendication 1, **caractérisé en ce qu'**il comprend de façon additionnelle un ou plusieurs pigments de lustre.

3. Revêtement de poudre d'effet selon la revendication 2, **caractérisé en ce que** le pigment de lustre comprend un pigment perlé ou un pigment à effet métallique.

4. Revêtement de poudre d'effet selon la revendication 2 ou 3, **caractérisé en ce que** la proportion de pigment de lustre est de 0,1% à 40% en poids, sur la base du mélange pris dans sa globalité.

5. Revêtement de poudre d'effet selon l'une quelconque des revendications 1 à 4, **caractérisé en ce que** le revêtement de poudre est un polyester, un polyacrylate ou un polyuréthane, un époxyde ou un polyester-époxyde.

6. Revêtement de poudre d'effet selon la revendication 1, **caractérisé en ce que** le revêtement de poudre est un mélange de deux revêtements de poudre ou plus qui diffèrent chimiquement et/ou en termes de couleur.

7. Revêtement de poudre d'effet selon la revendication 6, **caractérisé en ce qu'**au moins un composant du mélange de revêtement de poudre d'effet présente une dimension de particule inférieure à 10-20 µm.

8. Revêtement de poudre d'effet selon la revendication 6, **caractérisé en ce que** les particules de revêtement de poudre présentent une dimension de particule > 30 µm.

9. Procédé pour la préparation du revêtement de poudre d'effet selon la revendication 1, **caractérisé en ce qu'**un ou plusieurs pigments conducteurs et en option, un ou plusieurs pigments de lustre sont ajoutés de façon simultanée, de manière séparée ou en tant que mélange de pigments au revêtement de poudre et sont mélangés vigoureusement ensemble.

10. Utilisation du revêtement de poudre d'effet selon la revendication 1 pour revêtir des métaux, du bois, du verre, de la céramique, des matières plastiques et des matériaux de construction inorganiques.
